# EUROPEAN PATENT SPECIFICATION

(11) **EP 2 875 712 B1**
(45) Date of publication and mention of the grant of the patent: **19.10.2016**
(21) Application number: 13193819.3
(22) Date of filing: 21.11.2013
(51) Int. Cl.: A01D 34/78, A01D 69/02

(54) **Lawnmower battery arrangement**
Rasenmäherbatterieanordnung
Système de batterie de tondeuse à gazon

(43) Date of publication of application: 27.05.2015
(73) Proprietor: ROBERT BOSCH GMBH, 70442 Stuttgart (DE)
(72) Inventor: Koepf, Christian, IP92BA Wherstead (GB); Ling, Matthew, IP6 8QR Ipswich Suffolk (GB)

(56) References cited:
- EP-A1- 1 285 567
- EP-A1- 2 656 719
- WO-A1-91/15107
- FR-A1- 2 768 298
- GB-A- 2 298 116

## Description

The present invention relates to a battery-powered lawnmower and in particular to a lawnmower with at least two batteries.

In normal operating conditions, professional petrol lawnmowers typically have a run time on one fuel tank of 1 to 1.25 hours. A battery-powered lawnmower aimed at the professional market would therefore need to have a similar run time before the battery needs to be recharged or replaced with a fully-charged battery. Whilst batteries exist with sufficient capacity to run a lawnmower for a similar time, current battery technology is such that a suitable battery would be large, heavy and expensive. In addition, technical issues could arise due to insufficient cooling and subsequent restriction in usage cycles.

EP-A-1285567 represents the closest prior art and discloses a lawnmower having the features of the preamble of claim 1.

In accordance with the invention, there is provided a lawnmower comprising a chassis including a cutting chamber, a cutting blade rotatably mounted within the cutting chamber, and an electric motor mounted to the chassis above the cutting chamber which in use drives the cutting blade, wherein the electric motor is powered by at least two batteries which are spaced from one another to provide an air gap in between and wherein the batteries are mounted on a platform above the motor, a substantial proportion of the underside of the platform being open to air, characterised in that a pair of electrical terminals for connection with each battery are provided on the platform, separated by a substantially horizontal surface which includes a drainage aperture.

A cover is typically provided over the major components on a lawnmower chassis. The cover not only protects components and may improve the overall aesthetics of the product, but it also prevents the user accidentally or deliberately touching dangerous parts such as the cutting blade, drive belts, hot components such as the exhaust, or electrical components.

An advantageous feature of the present invention is that a cover is not necessary and the major components (motor, batteries, electronics housing) are uncovered in use and open to air. This improves access for cleaning, repair or servicing and also improves cooling of components such as the batteries, motor and electronics. It also saves the cost of the cover, which is a relatively bulky component. The major components have however been designed such that no danger is presented to the operator by the absence of a cover.

Preferably therefore, the top surface each battery is substantially uncovered and open to air when installed on the lawnmower. The batteries are preferably substantially cuboid in shape, and may be rectangular or square cuboid in shape. When in this form, preferably at least three faces of each battery are uncovered and open to air in use. In a particularly preferred arrangement, four faces of each battery are uncovered and open to air when installed on the lawnmower.

In accordance with the invention, the batteries are mounted on a platform above the motor and a substantial proportion of the underside of the platform is open to air. By spacing the batteries from the motor, cooling for the batteries and the motor can be improved. An electronics housing may also be mounted on the platform, adjacent to the batteries. The platform may be mounted to the motor by means of a plurality of mounting posts which space the platform from the motor and allow air to circulate in between.

A particular problem arises from the batteries being uncovered when mounted on the lawnmower, in respect of water resistance. The product must be designed so that it can be used in wet conditions and even left out in such conditions, with or without either or both batteries in place. Therefore, it is important that any water falling on the lawnmower cannot form a continuous bridge between the battery connections to the lawnmower. In accordance with the invention, one or more drainage apertures are provided on the platform to ensure that any water which collects is allowed to drain out. A pair of electrical terminals for connection with the battery are provided on the platform, separated by a substantially horizontal surface which includes the drainage aperture. The drainage aperture is preferably at least as long as the length of each terminal side which faces the other.

While the batteries may be located at any suitable place and with any suitable orientation, the batteries are preferably mounted side by side, in a transverse direction across the lawnmower. The air gap will therefore run longitudinally.

In order to balance the lawnmower, the batteries are preferably mounted with their transverse centrelines forward of the axis of the motor. They may be mounted entirely forward of the axis of the motor.

Preferably, each battery is rechargeable and is removable from the lawnmower. The batteries may slide onto the platform, and this may be most convenient from the front of the lawnmower. Each battery may be retained in a docked position on the lawnmower by means of a latch mechanism. In a preferred arrangement, the latch mechanism is movable from a latched position to an open position and includes a projection which, in the latched position, engages with the battery to retain the battery in the docked position. Preferably the latch mechanism is biased towards the latched position and is movable towards the open position against the latch biasing force.

In a further preferred arrangement, each battery is urged away from the docked position by a battery biasing force. The latch mechanism, when in the latched position, retains the battery in the docked position against the battery biasing force. Preferably, the battery biasing force is provided by a spring within the battery which acts against the lawnmower to cause them to separate in the absence of the latch retaining force.

The lawnmower of the present invention may include an isolator key which, when removed from the lawnmower, electrically isolates the batteries from the motor.

Through the provision of at least two batteries which are individually smaller than a single battery of the combined capacity, a run time equivalent to that of a petrol lawnmower can be achieved. The batteries may be similar to those commonly used for hand-held power tools. Through appropriate siting of the batteries, the balance of the product and the weight distribution through the wheels may be optimised. The batteries have an air gap in between so that both sides of each battery are able to cool to atmosphere. Extra cooling is achieved by airflow to the platform directly underneath.

An embodiment of the invention will now be described by way of example only and with reference to the accompanying drawings, in which:
Fig. 1 shows a perspective view of a lawnmower in accordance with the invention;
Fig. 2 shows a left side elevation of the lawnmower of Fig. 1;
Fig. 3 shows a front elevation of the lawnmower of Fig. 1;
Fig. 4 shows a plan view of the lawnmower of Fig. 1;
Fig. 5 shows a perspective exploded view of the lawnmower of Fig. 1;
Fig. 6 shows a perspective exploded view of the platform and electronics housing;
Fig. 7 shows a cross-sectional view of the battery, electronics housing, platform and latching mechanism; and
Figs. 8A and 8B show details of the drainage holes provided in the platform.

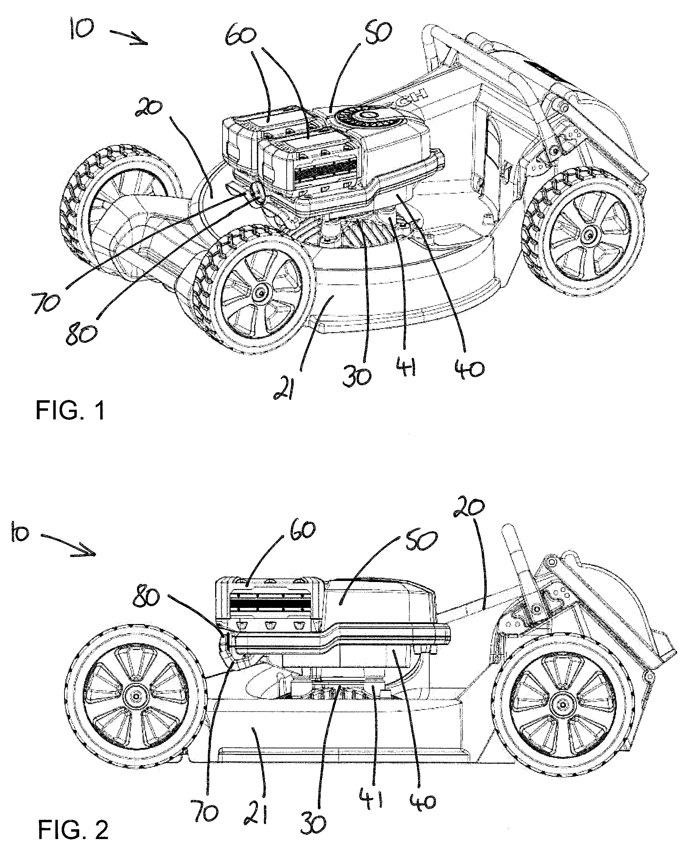

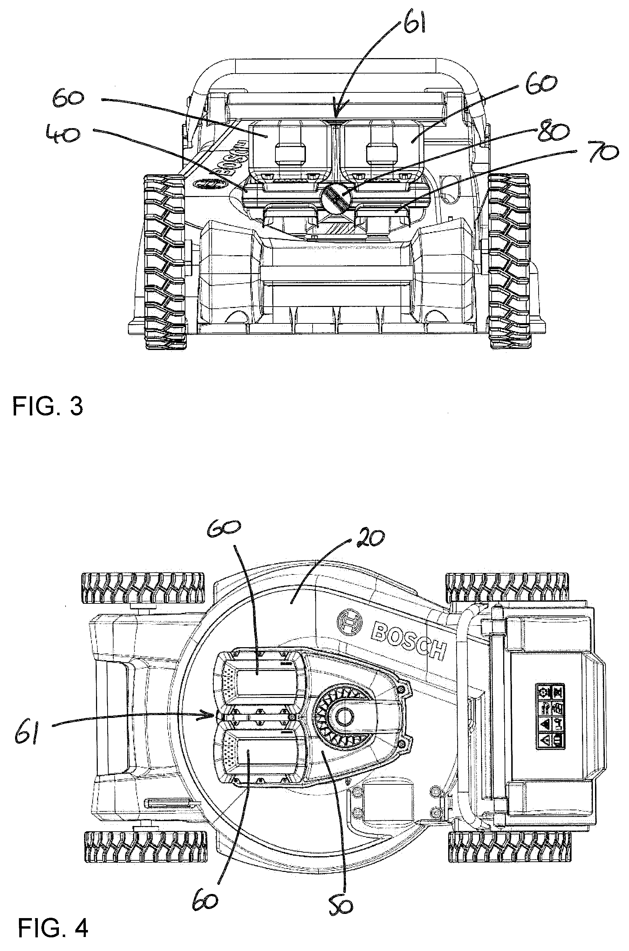

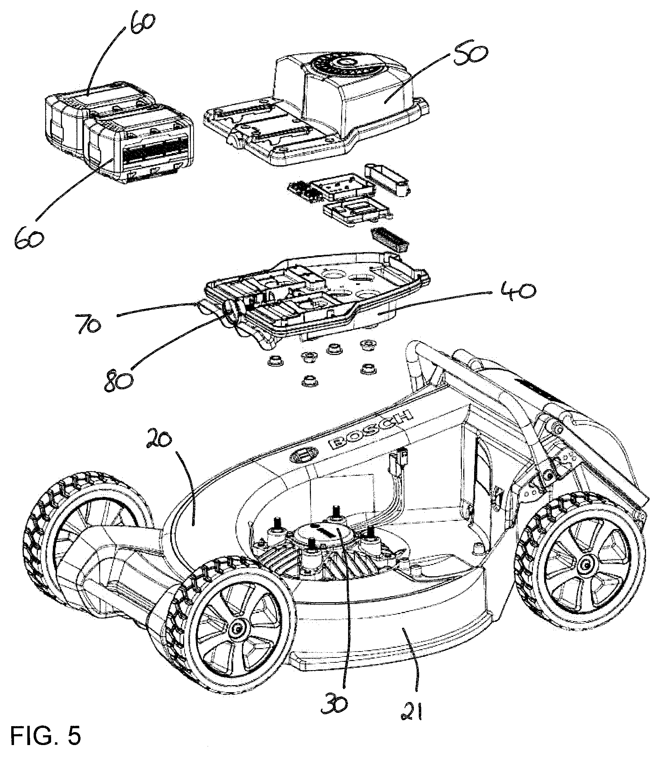

With reference to Figs. 1 to 5, a lawnmower 10 is shown. The main lawnmower components relevant to the invention are chassis 20, electric motor 30, platform 40, electronics housing 50 and batteries 60.

Chassis 20 defines a cutting chamber 21 within which a cutting blade (not shown) is rotatably mounted. Motor 30 is mounted to the chassis directly above the cutting chamber and drives the cutting blade within the cutting chamber in use.

Platform 40 is mounted onto the motor 30 by means of four pillars 41. These serve to space the platform from the motor and to promote airflow around and between these components.

An electronics housing 50 is provided on top of platform 40 and two rectangular batteries 60 are mounted with their elongate axes parallel with the longitudinal axis of the lawnmower. They are mounted in a side-by-side configuration and are separated by an air gap 61. The batteries are held in place by a latch mechanism 70 which is described in further detail below and an isolator key 80 is also provided.

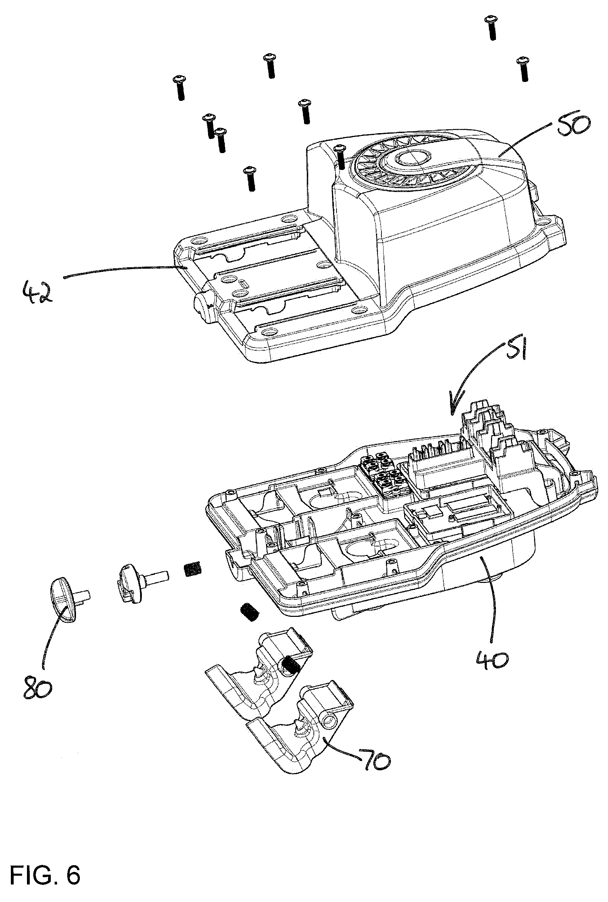

Fig. 6 shows a perspective exploded view of the platform 40 and electronics housing 50. Electronic components 51 are mounted on platform 40 and are covered by the housing 50. The forward part of platform 40 and electronics housing 50 combine to form docking bays 42 for each battery. Each battery 60 slides into its respective docking bay 42 from the front of the lawnmower.

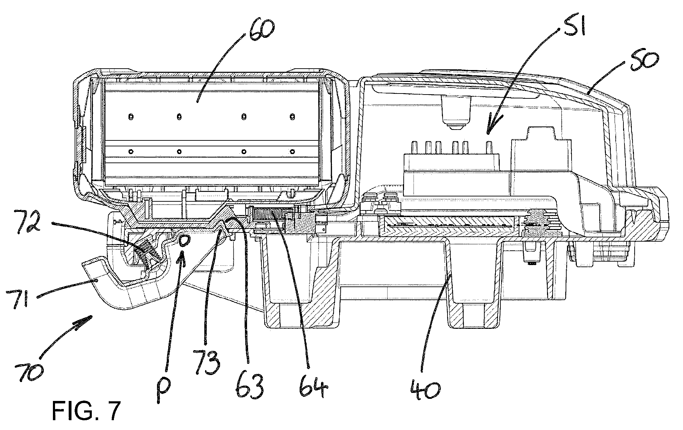

The battery docking and latching arrangement is shown in more detail in Fig. 7. Latch mechanism 70 comprises arm 71 which is able to pivot about point P between a latched and an open position. The latch arm 71 is biased towards the latched position (i.e. biased in an anti-clockwise direction) by means of spring 72. Latch arm 71 has a triangular latch projection 73 which engages with a corresponding recess 63 in battery 60 when the battery is docked and retains the battery in that position. When a battery is being inserted, the battery underside pushes latch projection downwards against the biasing force of spring 72 until the point at which battery recess 63 lines up with latch projection 73. Latch arm 71 will then snap into engagement with the battery under the spring biasing force and retain it in the docked position.

The battery is fitted with a spring 64 which provides a biasing force against the platform 40 to urge the battery away from the docked position, in a direction towards the front of the lawnmower. When the battery is in the docked position, the latch mechanism 70 retains the battery in that position against the battery biasing force provided by spring 64. When the latch mechanism 70 is released, spring 64 pushes the battery towards the front of the lawnmower (to the left in the figure) so that the electrical connections are broken. The battery can then be removed by continuing to slide it forwards and out of the docking bay 42.

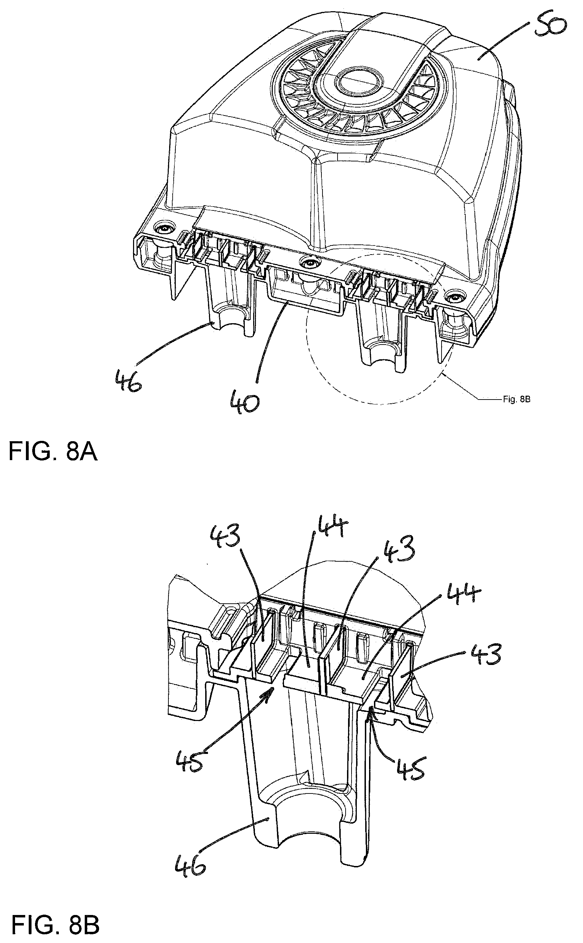

Figs. 8A and 8B show the electrical contacts 43 on platform 40, with which the battery makes connection when docked. In order to prevent any water landing on the lawnmower making a continuous bridge between the contacts, the positive and negative connections are arranged either side of a central sensor/data connection, through which information such as state of charge, cell temperature, etc. is communicated to the electronic control. A substantially horizontal surface 44 connects between each pair of vertically-oriented terminals 43. This surface is interrupted by a drainage slot 45 so that any water collecting in this area drains through into the mounting lugs 46 below. Each drainage slot is preferably at least 3mm wide and preferably at least as long as the length of each terminal side which faces the other.

## Claims

1. A lawnmower (10) comprising a chassis (20) including a cutting chamber (21), a cutting blade rotatably mounted within the cutting chamber, and an electric motor (30) mounted to the chassis above the cutting chamber which in use drives the cutting blade, wherein the electric motor (30) is powered by at least two batteries (60) which are spaced from one another to provide an air gap (61) in between and wherein the batteries (60) are mounted on a platform (40) above the motor, a substantial proportion of the underside of the platform being open to air, **characterised in that** a pair of electrical terminals (43) for connection with each battery (60) are provided on the platform, separated by a substantially horizontal surface (44) which includes a drainage aperture (45).

2. The lawnmower of claim 1, in which the top surface of each battery (60) is substantially uncovered in use and open to air.

3. The lawnmower of claim 1 or 2, in which the batteries (60) are substantially cuboid in shape and in which at least three faces of each battery are uncovered and open to air in use.

4. The lawnmower of any preceding claim, in which an electronics housing (50) is mounted on the platform (40), adjacent to the batteries (60).

5. The lawnmower of any preceding claim, in which the platform (40) is mounted to the motor (30) by means of a plurality of mounting posts (41) which space the platform from the motor and allow air to circulate in between.

6. The lawnmower of any preceding claim, in which the drainage aperture (45) is at least as long as the length of each terminal side which faces the other.

7. The lawnmower of any preceding claim, in which the batteries (60) are mounted side by side, in a transverse direction across the lawnmower.

8. The lawnmower of any preceding claim, in which the batteries (60) are mounted forward of the axis of the motor.

9. The lawnmower of any preceding claim, in which the batteries (60) are rechargeable and are removable from the lawnmower.

10. The lawnmower of claim 9, in which each battery (60) is retained in a docked position on the lawnmower by means of a latch mechanism (70).

11. The lawnmower of claim 10, in which the latch mechanism (70) is movable from a latched position to an open position and includes a projection (73) which, in the latched position, engages with the battery (60) to retain the battery in the docked position, the latch mechanism (73) being biased towards the latched position and movable towards the open position against the latch biasing force.

12. The lawnmower of claim 10 or 11, in which each battery (60) is urged away from the docked position by a battery biasing force provided by a spring (64) within the battery which acts against the lawnmower to cause them to separate, and in which the latch mechanism (70), when in the latched position, retains the battery in the docked position against the battery biasing force.

## Patentansprüche

1. Rasenmäher (10) mit einem Chassis (20), das eine Schneidkammer (21), eine drehbar in der Schneidkammer befestigte Schneidklinge und einen über der Schneidkammer an dem Chassis befestigten Elektromotor (30), der im Gebrauch die Schneidklinge antreibt, umfasst, wobei der Elektromotor (30) durch mindestens zwei Batterien (60) mit Strom versorgt wird, die voneinander beabstandet sind, um dazwischen einen Luftspalt (61) zu bilden, und wobei die Batterien (60) auf einer Plattform (40) über dem Motor befestigt sind, wobei ein wesentlicher Teil der Unterseite der Plattform zur Luft hin offen ist, **dadurch gekennzeichnet, dass** an der Plattform ein Paar elektrischer Anschlüsse (43) zur Verbindung mit jeder Batterie (60) vorgesehen ist, wobei die elektrischen Anschlüsse durch eine im Wesentlichen horizontale, eine Ablauföffnung (45) umfassende Fläche (44) voneinander getrennt sind.

2. Rasenmäher nach Anspruch 1, wobei die Oberfläche jeder Batterie (60) im Gebrauch im Wesentlichen unbedeckt und zur Luft hin offen ist.

3. Rasenmäher nach Anspruch 1 oder 2, wobei die Batterien (60) im Wesentlichen quaderförmig sind und wobei mindestens drei Seiten jeder Batterie im Gebrauch unbedeckt und zur Luft hin offen sind.

4. Rasenmäher nach einem der vorhergehenden Ansprüche, wobei ein Elektronikgehäuse (50) an der Plattform (40), neben den Batterien (60) befestigt ist.

5. Rasenmäher nach einem der vorhergehenden Ansprüche, wobei die Plattform (40) mittels einer Vielzahl von Befestigungsstiften (41), welche die Plattform von dem Motor beabstanden und der Luft erlauben, dazwischen zu zirkulieren, an dem Motor (30) befestigt ist.

6. Rasenmäher nach einem der vorhergehenden Ansprüche, wobei die Ablauföffnung (45) mindestens so lang ist wie die Länge jeder Anschlussseite, die der anderen zugewandt ist.

7. Rasenmäher nach einem der vorhergehenden Ansprüche, wobei die Batterien (60) nebeneinander, in einer Querrichtung über dem Rasenmäher befestigt sind.

8. Rasenmäher nach einem der vorhergehenden Ansprüche, wobei die Batterien (60) vor der Achse des Motors befestigt sind.

9. Rasenmäher nach einem der vorhergehenden Ansprüche, wobei die Batterien (60) wiederaufladbar und von dem Rasenmäher entfernbar sind.

10. Rasenmäher nach Anspruch 9, wobei jede Batterie (60) mittels eines Verriegelungsmechanismus (70) in einer angedockten Position an dem Rasenmäher gehalten wird.

11. Rasenmäher nach Anspruch 10, wobei der Verriegelungsmechanismus (70) von einer verriegelten Position in eine geöffnete Position bewegbar ist und einen Vorsprung (73) umfasst, der in der verriegelten Position an der Batterie (60) einrastet, um die Batterie in der angedockten Position zu halten, wobei der Verriegelungsmechanismus (73) in Richtung der verriegelten Position vorgespannt und gegen die Vorspannkraft des Riegels in Richtung der geöffneten Position bewegbar ist.

12. Rasenmäher nach Anspruch 10 oder 11, wobei jede Batterie (60) durch eine Vorspannkraft der Batterie, die durch eine Feder (64) in der Batterie bereitgestellt wird, die dem Rasenmäher entgegenwirkt, um zu bewirken, dass sie sich lösen, von der angedockten Position weggedrückt wird, und wobei der Verriegelungsmechanismus (70) die Batterie gegen die Vorspannkraft der Batterie in der angedockten Position hält, wenn er sich in der verriegelten Position befindet.

## Revendications

1. Tondeuse à gazon (10) comprenant un châssis (20) qui comprend une chambre de coupe (21), une lame de coupe montée rotative dans la chambre de coupe et un moteur électrique (30) monté sur le châssis au-dessus de la chambre de coupe et qui, en service, entraîne la lame de coupe,
dans laquelle le moteur électrique (30) est alimenté par au moins deux batteries (60) qui sont espacées l'une de l'autre pour assurer une fente d'aération (61) entre les deux et dans laquelle les batteries (60) sont montées sur une plate-forme (40) au-dessus du moteur, une proportion considérable de la face inférieure de la plate-forme étant à l'air libre,
**caractérisée en ce que** deux paires de bornes électriques (43) pour se brancher à chaque batterie (60) sont disposées sur la plate-forme, séparées par une surface (44) sensiblement horizontale qui comprend une ouverture d'écoulement (45).

2. Tondeuse à gazon selon la revendication 1, dans laquelle la surface supérieure de chaque batterie (60) est pour l'essentiel découverte en service et à l'air libre.

3. Tondeuse à gazon selon la revendication 1 ou 2, dans laquelle les batteries (60) sont de forme sensiblement cuboïdale et dans laquelle au moins trois faces de chaque batterie sont en service découvertes et à l'air libre.

4. Tondeuse à gazon selon l'une quelconque des revendications précédentes, dans laquelle un logement (50) pour électronique est monté sur la plate-forme (40), contigu aux batteries (60).

5. Tondeuse à gazon selon l'une quelconque des revendications précédentes, dans laquelle la plate-forme (40) est montée sur le moteur (30) au moyen d'une pluralité de montants (41) qui espacent la plateforme du moteur et permettent à l'air de circuler entre les deux.

6. Tondeuse à gazon selon l'une quelconque des revendications précédentes, dans laquelle l'ouverture d'écoulement (45) est au moins aussi longue que la longueur de chaque côté de borne en vis-à-vis.

7. Tondeuse à gazon selon l'une quelconque des revendications précédentes, dans laquelle les batteries (60) sont montées côte à côte le long de la direction transversale de la tondeuse à gazon.

8. Tondeuse à gazon selon l'une quelconque des revendications précédentes, dans laquelle les batteries (60) sont montées en avant de l'axe du moteur.

9. Tondeuse à gazon selon l'une quelconque des revendications précédentes, dans laquelle les batteries (60) sont rechargeables et peuvent être retirées de la tondeuse à gazon.

10. Tondeuse à gazon selon la revendication 9, dans laquelle chaque batterie (60) est maintenue dans une position arrimée sur la tondeuse à gazon au moyen d'un mécanisme de verrouillage (70).

11. Tondeuse à gazon selon la revendication 10, dans laquelle le mécanisme de verrouillage (70) est mobile d'une position fermée à une position ouverte et comprend une saillie (73) qui, en position fermée, est en prise avec la batterie (60) pour maintenir la batterie en position arrimée, le mécanisme de verrouillage (73) étant sollicité vers la position fermée et pouvant être déplacé vers la position ouverte en surmontant la force de sollicitation du verrou.

12. Tondeuse à gazon selon la revendication 10 ou 11, dans laquelle chaque batterie (60) est éloignée de la position arrimée par une force de sollicitation de la batterie produite par un ressort (64) à l'intérieur de la batterie qui agit contre la tondeuse à gazon pour les faire se séparer, et dans lequel le mécanisme de verrouillage (70), quand il est en position fermée, retient la batterie dans sa position arrimée en contrant la force de sollicitation de la batterie.
